# FASCICULE DE BREVET EUROPEEN

(11) **EP 3 921 950 B1**
(45) Date de publication et mention de la délivrance du brevet: **01.11.2023**
(21) Numéro de dépôt: 19829226.0
(22) Date de dépôt: 23.12.2019
(51) Int. Cl.: H04B 7/06

(54) **TRANSMISSION SECURISÉE DE DONNÉES PAR MODULATION SPATIALE**
SICHERE DATENÜBERTRAGUNG MITTELS RÄUMLICHER MODULATION
SECURE DATA TRANSMISSION BY SPATIAL MODULATION

(30) Priorité: 08.02.2019 FR 1901295
(43) Date de publication de la demande: 15.12.2021
(73) Titulaire: Centre National de la Recherche Scientifique, 75016 Paris Cedex 16 (FR); Institut National des Sciences Appliquées de Rennes, 35700 Rennes (FR)
(72) Inventeur: YVEN, François, 35510 CESSON-SEVIGNE (FR); HELARD, Maryline, 35700 RENNES (FR)
(74) Mandataire: Vidon Brevets & Stratégie
(86) Numéro de dépôt international: PCT/EP2019/086971
(87) Numéro de publication internationale: WO 2020/160832

(56) Documents cités:
- WANG SIXIN ET AL: "Physical-layer encryption in massive MIMO systems with spatial modulation", CHINA COMMUNICATIONS, CHINA INSTITUTE OF COMMUNICATIONS, PISCATAWAY, NJ, USA, vol. 15, no. 10, 1 octobre 2018 (2018-10-01), pages 159-171, XP011690938, ISSN: 1673-5447, DOI: 10.1109/CC.2018.8485478 [extrait le 2018-10-05]
- TAHA HASAN ET AL: "Secret Key Exchange and Authentication via Randomized Spatial Modulation and Phase Shifting", IEEE TRANSACTIONS ON VEHICULAR TECHNOLOGY, IEEE SERVICE CENTER, PISCATAWAY, NJ, US, vol. 67, no. 3, 1 mars 2018 (2018-03-01), pages 2165-2177, XP011679451, ISSN: 0018-9545, DOI: 10.1109/TVT.2017.2764388 [extrait le 2018-03-15]

## Description

### 1. Domaine de l'invention

L'invention se situe dans le domaine des communications numériques par transmissions radioélectriques. L'invention se situe plus particulièrement dans le domaine des systèmes de transmission « *entrées multiples, sorties multiples » (MIMO)* qui exploitent des techniques de modulation spatiale pour transmettre des données entre des dispositifs.

### 2. Art Antérieur

De nombreuses techniques de modulation existent pour la mise en oeuvre de systèmes de transmissions par émission et réception de signaux radioélectriques. Parmi les différentes modulations existantes, les techniques de modulation spatiale mises en oeuvre dans certains systèmes multi-antennaires exploitent des combinaisons d'antennes d'émission d'un dispositif multi-antennaires émetteur et/ou des combinaisons d'antennes de réception d'un dispositif multi-antennaires récepteur pour transmettre une information. En d'autres termes, l'information à transmettre n'est pas comprise dans le signal transmis en tant que tel, mais dans le sous-ensemble d'antennes utilisé pour transmettre et/ou recevoir ce signal. De telles modulations spatiales existent pour la liaison montante et pour la liaison descendante, et sont appelées respectivement modulation spatiale à l'émission et modulation spatiale à la réception.

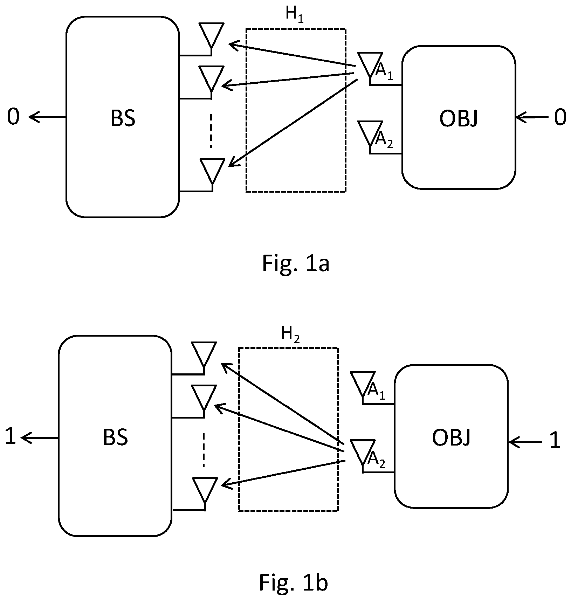

Dans le cadre d'une modulation spatiale à l'émission, différents groupes de bits formant chacun un symbole spatial sont associés respectivement à différents sous-ensembles d'antennes parmi l'ensemble des antennes d'émission d'un dispositif émetteur. La transmission d'un symbole spatial donné est alors réalisée par activation du sous-ensemble d'antennes d'émission associé : pendant une durée prédéterminée appelée « *durée symbole »,* les antennes de ce sous-ensemble sont activées pour émettre un signal quelconque. En analysant le champ électromagnétique reçu au niveau de ses différentes antennes, le dispositif récepteur détermine les antennes d'émission qui ont été activées au niveau du dispositif émetteur pour émettre le signal, et il en déduit le symbole transmis. Les **figures 1a et 1b** illustrent un exemple de modulation spatiale à deux états spatiaux pour la liaison montante entre un objet OBJ et une station de base BS. Dans cet exemple, l'objet OBJ comprend deux antennes d'émission A₁ et A₂. Lorsque l'objet OBJ veut émettre un bit à 0, il émet un signal quelconque via son antenne A₁ (figure 1a). Lorsque l'objet OBJ veut émettre un bit à 1, il émet un signal via son antenne A₂ (figure 1b). A réception d'un signal émis par l'objet OBJ, la station de base BS détermine par quel canal est passé ce signal en analysant le champ électromagnétique capté au niveau de ses antennes (par exemple en comparant le champ électromagnétique capté avec des profils de référence acquis et stockés durant une phase d'initialisation précédant la transmission de données). Si la station de base BS détermine que c'est le canal H₁ qui a été utilisé (c'est à dire que le signal a été émis depuis l'antenne A₁), elle en déduit que c'est un 0 qui a été émis (figure 1a). Si la station de base BS détermine que c'est le canal H₂ qui a été utilisé (c'est à dire que le signal a été émis depuis l'antenne A₂), elle en déduit que c'est un 1 qui a été émis (figure 1b).

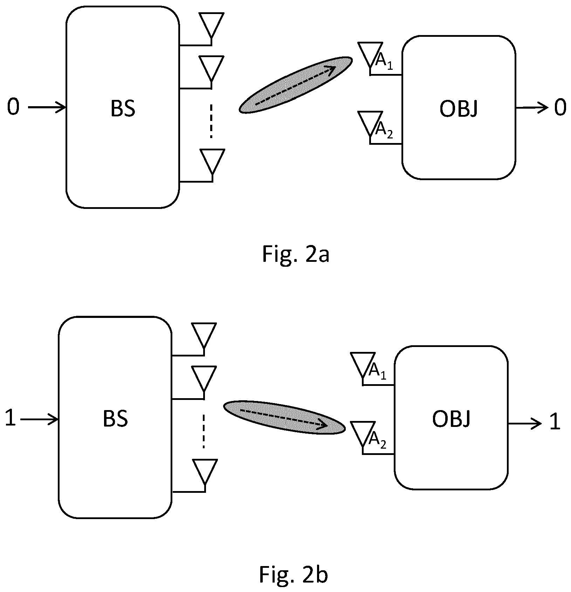

Dans le cadre d'une modulation spatiale à la réception, différents groupes de bits formant chacun un symbole spatial sont respectivement associés à différents sous-ensembles d'antennes parmi l'ensemble des antennes de réception d'un dispositif récepteur. Dans ce cas, la transmission d'un symbole spatial donné est réalisée de la manière suivante : pendant la durée symbole, le dispositif émetteur utilise ses différentes antennes pour former un signal dont l'énergie est concentrée vers le sous-ensemble d'antennes de réception associé au symbole spatial à transmettre. Des techniques de prétraitement - telles que par exemple la technique du forçage à zéro *(« Zero Forcing »)* ou la technique de formation de voies numérique ou analogique *(« Conjugate beamforming* ») - peuvent notamment être utilisée au niveau du dispositif émetteur afin de former des lobes de rayonnement dirigés vers des antennes cibles du dispositif de réception. En fonction des antennes cibles ainsi activées, le dispositif récepteur déduit le symbole transmis. Les **figures 2a et 2b** illustrent un exemple de modulation spatiale à deux états spatiaux pour la liaison descendante entre une station de base BS et un objet OBJ. Lorsque la station de base BS veut émettre un bit à 0, elle utilise ses antennes pour générer un signal dont l'énergie est concentrée vers l'antenne A₁ de l'objet OBJ (figure 2a). Lorsque la station de base BS veut émettre un bit à 1, elle utilise ses antennes pour générer un signal dont l'énergie est concentrée vers l'antenne A₂ de l'objet OBJ (figure 2b). Si l'objet OBJ reçoit un signal d'énergie concentrée sur son antenne A₁, il en déduit que c'est un 0 qui a été émis (figure 2a). Si l'objet OBJ reçoit un signal d'énergie concentrée sur son antenne A₂, il en déduit que c'est un 1 qui a été émis (figure 2b).

Les exemples donnés en relation avec les figures 1a, 1b, 2a et 2b visent à illustrer de manière simple le principe de base des modulations spatiales, mais ne sont pas limitatifs. En particulier, l'objet OBJ peut disposer de plus de deux antennes. Des modulations spatiales dites étendues peuvent également être mises en oeuvre, selon lesquelles plusieurs antennes peuvent être activées simultanément durant une durée symbole (ou au contraire aucune antenne), de manière à augmenter le débit. De telles modulations spatiales étendues sont par exemple décrites dans le brevet français FR3056047 B1. Par exemple, pour un objet OBJ comprenant deux antennes A₁ et A₂, il peut être défini, dans la table de correspondance partagée par l'objet OBJ et la station de base BS durant une phase d'initialisation préalable à la transmission de données, que le symbole « 00 » correspond à une absence d'activation des antennes A₁ et A₂, que le symbole « 01 » correspond à une activation de la seule antenne A₁, que le symbole « 10 » correspond à une activation de la seule antenne A₂, et que le symbole « 11 » correspond à une activation simultanée des antennes A₁ et A₂ durant une durée symbole (par activation, on entend l'émission ou la réception d'un signal sur l'antenne, selon que l'on se place dans le cas d'une liaison montante ou descendante).

Les techniques de modulation spatiale précédemment décrites sont susceptibles d'être utilisées notamment pour transmettre des données sensibles, telles que des données bancaires, des données biométriques, ou encore des données permettant de contrôler certains dispositifs critiques (par exemple des serrures, des dispositifs médicaux, etc.). Aussi, la question de la sécurité des transmissions est un point crucial : il s'agit à la fois d'empêcher un individu malveillant d'accéder à des données qui ne lui sont pas destinées, mais également de l'empêcher de nuire au fonctionnement de systèmes qu'il serait parvenu à pirater. Bien que les techniques de modulations spatiales apparaissent relativement sûres, il existe toujours un risque qu'une personne malveillante parvienne à identifier les antennes d'émission activées et/ou les antennes de réception visées lors d'une transmission de données, et qu'elle réussisse à en déduire le message échangé. À titre d'exemple, des vulnérabilités pourraient notamment être exploitées par une personne malveillante afin de dérègler à distance un simulateur cardiaque (« pacemaker ») implanté dans la poitrine d'un patient, mettant la vie de ce patient en danger. Le document "Physical-layer encryption in massive MIMO systems with spatial modulation", par Wang Sixin et Al, ISSN: 1673-5447, pages 159-171, décrit un système de communication par modulation spatiale chiffré, utilisant la technique CATMCPR.

Il existe donc un besoin de solutions permettant de renforcer encore la sécurité des transmissions réalisées au moyen de techniques de modulations spatiales.

### 3. Résumé de l'invention

La présente technique permet de résoudre en partie les problèmes posés par l'art antérieur. La présente technique se rapporte en effet, selon un premier aspect, à un procédé de transmission de données par modulation spatiale entre un premier dispositif comprenant au moins deux antennes et un deuxième dispositif comprenant au moins deux antennes. Le procédé comprend, au niveau du premier dispositif, préalablement à ladite transmission de données, une phase d'initialisation comprenant :
- une étape d'obtention d'au moins une clé spatiale, ladite au moins une clé spatiale comprenant une succession ordonnée d'indices, lesdits indices étant compris dans un même ensemble parmi un ensemble d'indices associés chacun à une des antennes dudit premier dispositif ou un ensemble d'indices associés chacun à une des antennes dudit deuxième dispositif ;
- au moins une première étape d'émission d'un signal à destination d'au moins une antenne du deuxième dispositif, à partir d'au moins une antenne du premier dispositif, en fonction de la succession ordonnée d'indices de ladite clé spatiale.

De cette manière, la phase d'initialisation préalable à la mise en oeuvre d'une transmission de données par modulation spatiale est modifiée ou à tout le moins complétée, afin d'y intégrer de nouvelles étapes permettant la réalisation ultérieure d'une transmission de données par modulation spatiale mieux sécurisée. Plus particulièrement, ces nouvelles étapes comprennent l'obtention d'une clé spatiale au niveau du premier dispositif, et le partage de la connaissance de cette clé spatiale avec un deuxième dispositif avec lequel le premier dispositif est amené à communiquer. Ainsi, cette clé peut ensuite être utilisée pour sécuriser le ou les échanges ultérieurs de données, au moyen de différents mécanismes. Le premier dispositif et le deuxième dispositif peuvent par exemple être, indifféremment, une station de base ou un objet communicant quelconque.

Dans un mode de réalisation particulier, ladite étape d'obtention d'au moins une clé spatiale comprend :
- une étape de sélection d'indices parmi ledit même ensemble ;
- une étape d'ordonnancement des indices sélectionnés, formant ladite succession ordonnée d'indices.

De cette manière la clé spatiale est générée au sein même du premier dispositif, en toute autonomie.

Dans une première implémentation, les indices de ladite au moins une clé spatiale sont compris dans l'ensemble d'indices associés chacun à une des antennes dudit premier dispositif, et ladite au moins une première étape d'émission comprend au moins une étape d'émission d'un signal à destination de toutes les antennes du deuxième dispositif à partir d'une antenne source du premier dispositif.

Ainsi, la technique proposée permet la mise en oeuvre d'une transmission des différents symboles spatiaux composant la clé spatiale par activation successive, au niveau du premier dispositif, de sous-ensembles d'antennes d'émission associé à chaque symbole spatial à transmettre. En analysant le champ électromagnétique reçu au niveau de ses différentes antennes pendant chaque durée symbole, le deuxième dispositif détermine les antennes d'émission qui ont été activées au niveau du premier dispositif pour émettre le signal, et il en déduit chaque symbole transmis, ce qui lui permet finalement de reconstituer la clé spatiale. Une telle implémentation correspond par exemple au cas où le premier dispositif est un objet communicant, et où le deuxième dispositif est une station de base.

Selon une caractéristique particulière de ladite première implémentation, ladite transmission de données comprend au moins une deuxième étape d'émission d'un signal à destination dudit deuxième dispositif, à partir d'une antenne source du premier dispositif dont l'indice n'est pas compris dans ladite au moins une clé spatiale.

De cette manière le premier dispositif est configuré pour émettre de façon répétée des signaux depuis au moins une antenne dont l'indice n'est pas compris dans la clé spatiale, pendant la transmission de données. Ces signaux ne contribuent pas à l'échange de données utiles entre le premier dispositif et le deuxième dispositif, mais forment un bruit artificiel ajouté à la transmission de données utiles. On dispose ainsi d'un premier mécanisme permettant d'améliorer la sécurisation d'une transmission de données par modulation spatiale dans la mesure où la présence de ce bruit artificiel complique la tâche d'une personne malveillante qui chercherait à intercepter et comprendre les données échangées entre le premier dispositif et le deuxième dispositif.

Selon une autre caractéristique particulière de ladite première implémentation, ledit procédé de transmission de données par modulation spatiale comprend une étape de déclenchement d'une alerte lorsque ledit premier dispositif reçoit un signal dont l'énergie est focalisée sur une antenne cible du premier dispositif dont l'indice n'est pas compris dans ladite au moins une clé spatiale.

De cette manière, on dispose d'un deuxième mécanisme permettant d'améliorer la sécurisation d'une transmission de données par modulation spatiale. Ce mécanisme consiste à déclencher une alerte lorsque le premier dispositif détecte qu'il reçoit un signal dont l'énergie est focalisée sur une de ses antennes dont l'indice n'est pas compris dans la clé spatiale. Le deuxième dispositif n'étant pas censé émettre à destination de telles antennes, soit le signal reçu provient d'un autre dispositif que le deuxième dispositif avec lequel le premier dispositif est censé communiquer, soit le deuxième dispositif a été corrompu : il y a donc suspicion de tentative de piratage.

Dans une deuxième implémentation, les indices de ladite au moins une clé spatiale sont compris dans l'ensemble d'indices associés chacun à une des antennes dudit deuxième dispositif, et ladite au moins une première étape d'émission comprend au moins une étape d'émission d'un signal à destination d'une antenne cible du deuxième dispositif à partir d'au moins une antenne du premier dispositif.

Ainsi, la technique proposée permet la mise en oeuvre d'une transmission des différents symboles spatiaux composant la clé spatiale en exploitant la capacité du premier dispositif à émettre un signal dont l'énergie est focalisée dans une ou plusieurs directions souhaitées. Les antennes du deuxième dispositif avec des indices appartenant à la clé spatiale sont ainsi spécifiquement ciblées, ce qui permet au deuxième dispositif de déduire la clé spatiale. Une telle implémentation correspond par exemple au cas où le premier dispositif est une station de base, et où le deuxième dispositif est un objet communicant.

Selon une caractéristique particulière de ladite deuxième implémentation, ladite transmission de données comprend au moins une troisième étape d'émission d'un signal à destination dudit deuxième dispositif, à destination d'une antenne cible du deuxième dispositif dont l'indice n'est pas compris dans ladite au moins une clé spatiale.

De cette manière le premier dispositif est configuré pour émettre de façon répétée des signaux à destination d'au moins une antenne du deuxième dispositif dont l'indice n'est pas compris dans la clé spatiale, pendant la transmission de données. Ces signaux ne contribuent pas à l'échange de données utiles entre le premier dispositif et le deuxième dispositif, mais forment un bruit artificiel ajouté à la transmission de données utiles. On dispose ainsi, dans le cadre de cette deuxième implémentation, d'un mécanisme de sécurisation d'une transmission de données par modulation spatiale s'apparentant au premier mécanisme de sécurisation décrit en relation avec la première implémentation : la génération de ce bruit artificiel complique la tâche d'une personne malveillante qui chercherait à intercepter et comprendre les données échangées entre le premier dispositif et le deuxième dispositif.

Selon une autre caractéristique particulière de ladite deuxième implémentation, ledit procédé de transmission de données par modulation spatiale comprend une étape de déclenchement d'une alerte lorsque ledit premier dispositif détermine qu'une des données reçues durant ladite transmission de données provient d'une antenne source du deuxième dispositif dont l'indice n'est pas compris dans ladite au moins une clé spatiale.

De cette manière, on dispose dans le cadre de cette deuxième implémentation, d'un mécanisme de sécurisation d'une transmission de données par modulation spatiale s'apparentant au deuxième mécanisme de sécurisation décrit en relation avec la première implémentation. Ce mécanisme consiste à déclencher une alerte lorsque le premier dispositif détecte qu'il reçoit un signal en provenance d'antennes du deuxième dispositif dont l'indice n'est pas compris dans la clé spatiale. Le deuxième dispositif n'étant pas censé émettre à partir de telles antennes, soit le signal reçu provient d'un autre dispositif que le deuxième dispositif avec lequel le premier dispositif est censé communiqué, soit le deuxième dispositif a été corrompu : il y a donc suspicion de tentative de piratage.

Dans un mode de réalisation particulier, ladite transmission de données est une transmission de données chiffrées, et ladite au moins une clé spatiale est une clé cryptographique associée auxdites données chiffrées.

De cette manière, en plus de définir les antennes qui seront utilisées pour la transmission par modulation spatiale des données utiles entre le premier dispositif et le deuxième dispositif, la clé spatiale fait également office de clé cryptographique permettant de chiffrer et/ou déchiffrer les données échangées. La sécurisation de la transmission de données est ainsi encore plus renforcée.

Selon un autre aspect, la technique proposée se rapporte également à un premier dispositif comprenant au moins deux antennes, et configuré pour la mise en oeuvre d'une transmission de données par modulation spatiale avec un deuxième dispositif comprenant au moins deux antennes. Ledit premier dispositif comprend :
- des moyens d'obtention d'au moins une clé spatiale, ladite au moins une clé spatiale comprenant une succession ordonnée d'indices, lesdits indices étant compris dans un même ensemble parmi un ensemble d'indices associés chacun à une des antennes dudit premier dispositif et un ensemble d'indices associés chacun à une des antennes dudit deuxième dispositif ;
- des moyens d'émission d'un signal à destination d'au moins une antenne du deuxième dispositif, à partir d'au moins une antenne du premier dispositif, en fonction de la succession ordonnée d'indices de ladite clé spatiale.

Selon encore un autre aspect, la technique proposée se rapporte à un produit programme d'ordinateur téléchargeable depuis un réseau de communication et/ou stocké sur un support lisible par ordinateur et/ou exécutable par un microprocesseur, caractérisé en ce qu'il comprend des instructions de code de programme pour l'exécution d'un procédé de transmission de données par modulation spatiale tel que décrit précédemment.

Selon une implémentation préférée, les différentes étapes du procédé de transmission de données par modulation spatiale selon la technique proposée sont ainsi mises en oeuvre par un ou plusieurs logiciels ou programmes d'ordinateur, comprenant des instructions logicielles destinées à être exécutées par un processeur de données selon la technique proposée et étant conçu pour commander l'exécution des différentes étapes du procédé.

En conséquence, la technique proposée vise aussi un programme, susceptible d'être exécuté par un ordinateur ou par un processeur de données, et en particulier un processeur sécurisé, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en oeuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- les figures 1a et 1b, déjà présentées, illustrent un exemple de modulation spatiale d'émission à deux états spatiaux pour la liaison montante entre un objet et une station de base, selon l'art antérieur ;
- les figures 2a et 2b, déjà présentées, illustrent un exemple de modulation spatiale à la réception à deux états spatiaux pour la liaison descendante entre une station de base et un objet, selon l'art antérieur ;
- la figure 3 présente les principales étapes mises en oeuvre durant la phase d'initialisation du procédé de transmission de données par modulation spatiale selon la technique proposée, dans un mode de réalisation particulier ;
- la figure 4 montre un premier exemple de mise en oeuvre d'une transmission d'une clé spatiale d'un premier dispositif à un deuxième dispositif, dans un mode de réalisation particulier ;
- la figure 5 montre un deuxième exemple de mise en oeuvre d'une transmission d'une clé spatiale d'un premier dispositif à un deuxième dispositif, dans un autre mode de réalisation particulier de la technique proposée ;
- la figure 6 montre un troisième exemple de mise en oeuvre d'une transmission d'une clé spatiale d'un premier dispositif à un deuxième dispositif, dans encore un autre mode de réalisation particulier de la technique proposée ;
- la figure 7 présente de façon schématique les principaux composants d'un premier dispositif configuré pour la mise en oeuvre d'une transmission de données par modulation spatiale avec un deuxième dispositif, dans un mode de réalisation particulier.

### 5. Description

La présente technique se rapporte, selon un premier aspect, à un procédé original de transmission de données par modulation spatiale entre un premier dispositif et un deuxième dispositif. Le concept inventif général de la technique proposée réside plus particulièrement dans l'exploitation de certaines spécificités propres aux modulations spatiales afin de mieux sécuriser la transmission de données. Il s'agit notamment d'empêcher, ou à tout le moins de rendre plus ardue, la réalisation de toute action entreprise par une personne malveillante et visant à accéder à des données échangées entre un premier dispositif et un deuxième dispositif ou à prendre le contrôle d'au moins un de ces dispositifs. Comme cela a déjà été décrit en relation avec l'art antérieur, la mise en oeuvre d'une modulation spatiale fait intervenir des dispositifs multi-antennaires. Ainsi, le premier dispositif et le deuxième dispositif comprennent chacun au moins deux antennes. Le terme « antenne » doit cependant être considéré dans un sens large. Ainsi, un « dispositif comprenant au moins deux antennes » peut correspondre, dans le cadre de la technique proposée, à un dispositif comprenant au moins deux antennes physiquement distinctes, mais également à un dispositif apte à mettre en oeuvre au moins deux modes de propagation différents (c'est à dire au moins deux diagrammes rayonnants différents). Ainsi, un dispositif comprenant une antenne reconfigurable apte à mettre en oeuvre au moins deux modes de propagation différents (produisant des diagrammes rayonnants différents) est par exemple bien considéré comme étant un dispositif comprenant au moins deux antennes, au sens de l'invention.

Classiquement, la réalisation d'une transmission de données par modulation spatiale requiert la mise en oeuvre préalable d'une phase d'initialisation durant laquelle des informations sont échangées entre le premier et le deuxième dispositif. Ces informations portent notamment sur le nombre d'antennes compris dans l'un des dispositifs, sur des moyens d'identifier et de distinguer ces antennes, et sur l'établissement d'une table de correspondance entre des combinaison de ces antennes et des symboles, les différents symboles étant les éléments de base utilisés ultérieurement pour former les messages à transmettre. Un moyen d'identifier et de distinguer les antennes consiste à leur attribuer chacune un label unique. Dans la suite du document, on considère le cas courant où ce label prend la forme d'un indice : chaque antenne d'un dispositif est ainsi associée à un indice distinct de celui de ses autres antennes. L'utilisation d'autres moyens que des indices pour identifier et distinguer les différentes antennes d'un dispositif reste bien entendu possible sans sortir du cadre de la technique proposée.

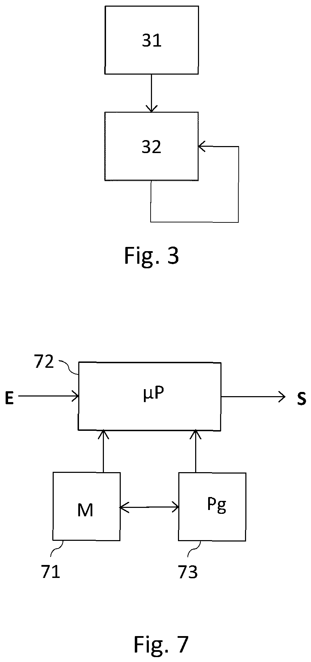

Selon le principe général de l'invention, la phase d'initialisation précédemment décrite est modifiée ou à tout le moins complétée, afin notamment d'y intégrer de nouvelles étapes permettant la réalisation ultérieure d'une transmission de données par modulation spatiale mieux sécurisée. Ces étapes, mises en oeuvre par le premier dispositif durant la phase d'initialisation du procédé de transmission de données, sont décrites en relation avec la figure 3, dans un mode de réalisation particulier.

Dans une étape 31 de la phase d'initialisation, le premier dispositif obtient une succession ordonnée d'indices qui forme ce qui est désigné sous le terme de « clé spatiale » dans le cadre de la technique proposée. Tous les indices de cette succession ordonnée d'indices sont compris dans un même ensemble parmi :
- un ensemble d'indices associés aux antennes du premier dispositif ; et/ou
- un ensemble d'indices associés aux antennes dudit deuxième dispositif.

Comme cela est décrit de manière plus détaillée dans la suite de ce document, les antennes associées aux différents indices présents dans la clé spatiale forment un ensemble d'antennes destinées à être utilisées par la suite pour la transmission effective de données par modulation spatiale. L'étape d'obtention 31 peut prendre la forme d'une étape de réception de la clé spatiale en provenance d'un dispositif tiers. Elle peut également prendre la forme d'une étape de génération de la clé spatiale au sein même du premier dispositif, comprenant une étape de sélection d'indices au sein d'un même ensemble d'indices, puis une étape d'ordonnancement des indices sélectionnés afin de former la succession ordonnée d'indices définissant la clé spatiale.

La clé spatiale obtenue par le premier dispositif à l'étape d'obtention 31 est ensuite communiquée au deuxième dispositif. A cette fin, le premier dispositif met en oeuvre au moins une étape 32 d'émission d'un signal à destination d'au moins une antenne du deuxième dispositif, à partir d'au moins une antenne du premier dispositif, en fonction de la succession ordonnée d'indices de ladite clé spatiale.

Comme décrit ci-après, cette transmission de la clé spatiale du premier dispositif au deuxième dispositif exploite les spécificités du contexte d'une transmission de données par modulation spatiale, et peut être mise en oeuvre de différentes manières en fonction des dispositifs en présence et de leurs capacités respectives.

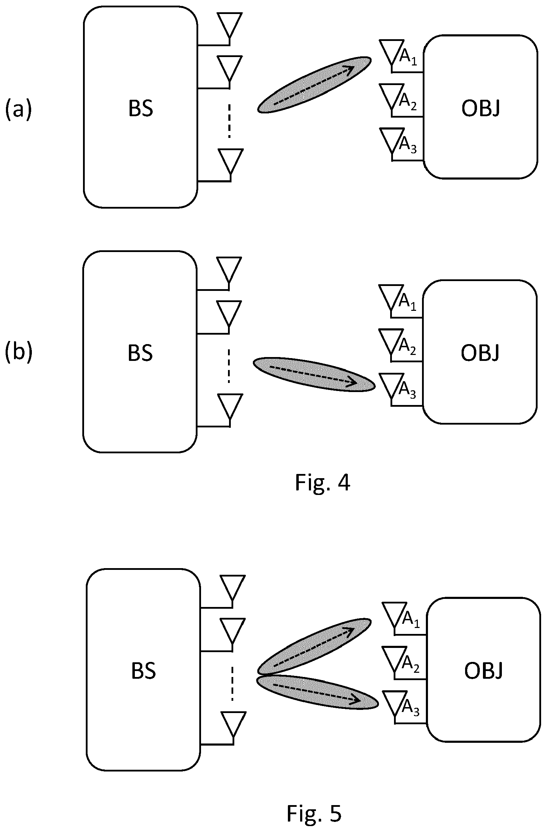

Par exemple, dans une configuration classique telle que celle déjà décrite en relation avec les figures 1a à 2b, la transmission de données par modulation spatiale est réalisée entre une station de base et un objet connecté quelconque. Il est entendu que cet exemple n'est nullement limitatif et que la technique proposée s'applique également à des dispositifs d'autres natures. Comme illustré dans les figures 4 à 6, la station de base BS comprend une pluralité d'antennes (au moins deux, formant ainsi un réseau d'antennes) et l'objet OBJ comprend par exemple trois antennes A₁, A₂ et A₃. Afin de permettre la mise en oeuvre de transmission de données par modulation spatiale, la station de base BS comprend des moyens de contrôle du rayonnement des signaux émis par le réseau d'antennes, qui la rendent apte à former des lobes de rayonnement spécifiquement orientés vers des antennes ciblées de l'objet OBJ. La station de base BS dispose également de moyens lui permettant de déterminer le canal utilisé (en d'autres termes, les antennes utilisées) par l'objet OBJ pour émettre un signal, sur la base par exemple d'une comparaison d'un champ électromagnétique capté par son réseau d'antennes avec des profils électromagnétiques de référence préalablement acquis et stockés dans la station de base BS.

On suppose que, de manière classique et similaire aux techniques de modulations spatiales de l'art antérieur, la station de base BS a déjà recueilli certaines informations concernant l'objet OBJ avec lequel elle s'apprête à communiquer (c'est à dire avant la mise en oeuvre de la modulation spatiale). Plus particulièrement, la station de base BS a déjà connaissance du nombre d'antennes de l'objet OBJ (trois dans le cas présent) et des différents indices associés à ces antennes (indice 1, indice 2, indice 3 associés respectivement aux antennes A₁, A₂ et A₃) qui permettent de les distinguer les unes des autres.

Dans une première implémentation possible d'une transmission de données entre la station de base BS et l'objet OBJ, la phase d'initialisation selon la technique proposée est mise en oeuvre par la station de base BS. Conformément à l'étape d'obtention 31 (figure 3), la station de base BS obtient au moins une clé spatiale, qui est formée d'une succession ordonnée d'indices, dont chacun est compris dans l'ensemble d'indices associés aux antennes de l'objet OBJ, c'est à dire dans l'ensemble (1,2,3). Par exemple, une telle clé spatiale est définie par la succession ordonnée d'indices 1-3, par la succession ordonnée d'indices 3-1-2, ou encore par la succession ordonnée d'indices 2-1-2-1.

Conformément à l'étape d'émission 32 (figure 3), la clé spatiale est ensuite transmise à l'objet OBJ. Ceci est réalisé en exploitant la capacité de la station de base BS à émettre un signal dont l'énergie est focalisée dans une ou plusieurs directions souhaitées, grâce à son réseau d'antennes. Plus particulièrement, la transmission de la clé spatiale comprend une ou plusieurs étapes d'émission d'un signal dirigé vers l'objet OBJ, comprenant la formation de lobes de rayonnement orienté vers les antennes de l'objet OBJ dont un indice est compris dans la clé spatiale, par exemple vers les antennes A₁ et A₃ dans le cas d'une clé spatiale égale à 1-3.

Dans un mode de réalisation particulier illustré en relation avec la **figure 4****,** la transmission de la clé spatiale comprend autant d'étapes d'émission successives que d'indices présents dans la clé spatiale, chaque étape d'émission comprenant la formation d'un unique lobe de rayonnement orienté vers une des antennes de l'objet OBJ. Ainsi, pour transmettre la clé spatiale 1-3, la station de base BS émet dans un premier temps (a) un signal avec un lobe de rayonnement dirigé vers l'antenne A₁, puis dans un deuxième temps (b) un signal avec un lobe de rayonnement dirigé vers l'antenne A₃. Selon une caractéristique particulière de ce mode de réalisation, l'ordre des émissions a une importance, en ce sens qu'il respecte l'ordre de la succession ordonnée d'indices formant la clé spatiale. Ainsi, les clés spatiales 1-3 d'une part et 3-1 d'autre part dont différentes, et la station de base BS émet d'abord un signal avec un lobe de rayonnement dirigé vers l'antenne A₃, puis un signal avec un lobe de rayonnement dirigé vers l'antenne A₁ si c'est la clé 3-1 qui doit être transmise.

Alternativement, dans un autre mode de réalisation particulier illustré en relation avec la **figure 5**, la transmission de la clé spatiale comprend une seule étape d'émission comprenant la formation d'autant de lobes de rayonnement que d'indices présents dans la clé spatiale. Ainsi, pour transmettre la clé spatiale 1-3, la station de base BS émet un signal présentant simultanément deux lobes de rayonnement, l'un dirigé vers l'antenne A₁ et l'autre vers l'antenne A₃. Au niveau de l'objet OBJ, la distinction entre la clé spatiale 1-3 d'une part et la clé spatiale 3-1 d'autre part peut alors par exemple être réalisée en comparant la quantité d'énergie reçue par les antennes A₁ et A₃ : si l'énergie reçue sur l'antenne A₁ est supérieure à l'énergie reçue sur l'antenne A₃, l'objet OBJ en déduit que c'est la clé spatiale 1-3 qui a été reçue, et inversement. Alternativement, l'ordre de la succession ordonnée d'indices formant la clé spatiale peut être reconstruit au niveau de l'objet OBJ, sur la base d'une information préalablement partagée entre les dispositifs, et relative à des poids associés aux différentes antennes : ainsi, s'il a été préalablement défini et partagé entre l'objet OBJ et la station de base BS que le poids de l'antenne A₃ est supérieur au poids de l'antenne A₂ qui est lui-même supérieur au poids de l'antenne A₁, l'objet OBJ déduit que c'est la clé spatiale 3-1 qui a été reçue quand ses antennes A₁ et A₃ sont simultanément visées par des lobes de rayonnement émis depuis la station de base BS.

Dans une deuxième implémentation possible d'une transmission de données entre la station de base BS et l'objet OBJ, la phase d'initialisation selon la technique proposée est mise en oeuvre par l'objet OBJ. A l'étape 31 (figure 3), la clé spatiale est obtenue par l'objet OBJ, et non plus par la station de base BS. Cette clé spatiale est formée d'une succession ordonnée d'indices, dont chacun est compris dans l'ensemble d'indices associés aux antennes de l'objet OBJ, c'est à dire l'ensemble (1,2,3). Les exemples de clés spatiales donnés en relation avec la première implémentation - à savoir une clé spatiale formée par la succession ordonnée d'indices 1-3, par la succession ordonnée d'indices 3-1-2, ou encore par la succession ordonnée d'indices 2-1-2-1 - restent des exemples valables dans le cadre de cette deuxième implémentation.

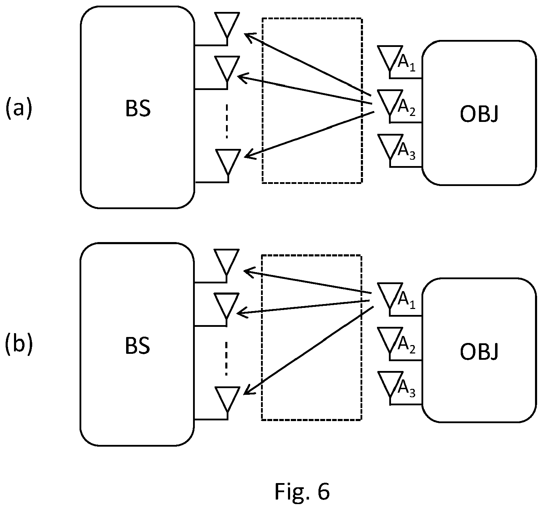

Conformément à l'étape 32 (figure 3), la clé spatiale est ensuite transmise à la station de base BS. Plus particulièrement, la transmission de la clé spatiale comprend une ou plusieurs étapes d'émission d'un signal dirigé vers la station de base BS, en provenance des antennes de l'objet OBJ dont un indice est compris dans la clé spatiale, par exemple en provenance des antennes A₂ et A₁ dans le cas d'une clé spatiale égale à 2-1. Dans un mode de réalisation particulier illustré en relation avec la **figure 6****,** la transmission de la clé spatiale comprend autant d'étapes d'émission successives que d'indices présents dans la clé spatiale, chaque étape d'émission comprenant l'émission d'un signal à partir d'une des antennes de l'objet. Ainsi, pour transmettre la clé spatiale 2-1, l'objet OBJ émet dans un premier temps (a) un signal depuis son antenne A₂, puis dans un deuxième temps (b) un signal depuis son antenne A₁. Si c'est la clé spatiale 1-2 qui doit être transmise, l'objet OBJ émet d'abord un signal depuis son antenne A₁, puis depuis son antenne A₂. La station de base BS détermine la clé spatiale en analysant le champ électromagnétique capté par son réseau d'antennes.

Bien que non illustré dans les figures, il est entendu que, par analogie avec ce qui a déjà été décrit en relation avec la figure 5 dans le cas d'une clé spatiale transmise de la station de base vers l'objet, un autre mode de réalisation consistant à émettre simultanément depuis plusieurs antennes de l'objet OBJ peut également être mis en oeuvre pour transmettre une clé spatiale de l'objet vers la station de base.

A l'issue de la phase d'initialisation selon la technique proposée, la connaissance de la clé spatiale a donc été partagée entre la station de base BS et l'objet OBJ, et cette clé peut alors être utilisée pour sécuriser le ou les échanges ultérieurs de données au moyen de différents mécanismes dont des exemples sont décrits par la suite. En particulier, selon la technique proposée, les antennes de l'objet OBJ dont un indice est compris dans la clé spatiale sont celles utilisées par la suite pour la transmission de données par modulation spatiale. Selon une caractéristique particulière, l'ordre de la succession ordonnée d'indices formant la clé est alors important en ce qu'il permet d'attribuer des poids aux antennes de l'objet OBJ dont un indice est compris dans la clé spatiale. Par exemple, une clé spatiale égale à 3-1 signifie que seules les antennes A₁ et A₃ de l'objet seront utilisées pour la transmission de données par modulation spatiale, mais indique également, dans un mode de réalisation, que la modulation spatiale sera (dans le cas d'une modulation spatiale non étendue) une modulation spatiale à deux états, dans lequel le symbole de poids fort (c'est à dire le bit 1) sera associé à l'antenne A₃, et le symbole de poids faible (c'est à dire le bit 0) associé à l'antenne A₁.

Dans un mode de réalisation particulier, la clé spatiale est définie de manière à ce que le nombre d'indices distincts qui la compose soit strictement inférieur au nombre total d'antennes de l'objet OBJ (par indices distincts, on entend des indices qui n'ont pas la même valeur). En d'autres termes, au moins un indice associé à une des antennes de l'objet OBJ ne fait pas partie de la succession ordonnée d'indices qui forme la clé spatiale. La clé spatiale 1-3-1-3 (qui ne contient pas l'indice 2 associé à l'antenne A₂ de l'objet OBJ), la clé spatiale 2-3 (qui ne contient pas l'indice 1 associé à l'antenne A₁ de l'objet OBJ), ou la clé spatiale 1-1-1 (qui ne contient pas les indices 2 et 3 associés respectivement aux antennes A₂ et A₃ de l'objet OBJ) sont des exemples de clés spatiales qui répondent à un tel critère.

De telles clés sont intéressantes en ce qu'elles permettent à la station de base BS et à l'objet OBJ de s'entendre sur un sous-ensemble d'antennes de l'objet OBJ - mais pas l'ensemble des antennes de l'objet OBJ - réservé à la transmission ultérieure de données utiles par modulation spatiale. Par données utiles, on entend ici les données qui font partie intégrante des messages destinés à être transmis, par opposition à des données autres qui - bien que reçues ou émises - ne font pas partie intégrante de ces messages et peuvent donc à ce titre être qualifiées de bruit.

Ainsi, par exemple :
- dans le cas d'une liaison montante (de l'objet OBJ vers la station de base BS), seule une partie des antennes d'émission de l'objet OBJ agissant en tant que dispositif émetteur est utilisée pour émettre des données utiles à destination de la station de base BS agissant en qualité de dispositif récepteur ; ainsi la transmission de la clé spatiale 1-3 signifie que les données utiles ne seront émises qu'à partir des antennes A₁ et A₃ de l'objet OBJ : au niveau de la station de base BS, tout signal identifié comme provenant de l'antenne A₂ est donc considéré comme ne contribuant pas à la transmission de données utiles et peut être ignoré ;
- dans le cas d'une liaison descendante (de la station de base BS vers l'objet OBJ), seule une partie des antennes de réception de l'objet OBJ agissant en tant que dispositif récepteur est utilisée pour recevoir des données utiles en provenance de la station de base BS agissant en qualité de dispositif émetteur; ainsi la transmission de la clé spatiale 2-3 signifie que les données utiles ne seront reçues que sur les antennes A₂ et A₃ de l'objet : au niveau de l'objet OBJ, tout signal reçu sur l'antenne A₁ est donc considéré comme ne contribuant pas à la transmission de données utiles et peut être ignoré.

Une telle implémentation permet la mise en oeuvre de différents mécanismes destinés à mieux sécuriser la transmission de données par modulation spatiale, par rapport aux techniques classiques de l'art antérieur. Selon différents modes de réalisation de la technique proposée, ces mécanismes comprennent notamment :
- la génération d'un bruit artificiel destiné à compliquer la tâche d'une personne malveillante qui chercherait à intercepter et comprendre les données échangées entre la station de base BS et l'objet OBJ ; et/ou
- la levée d'alertes en cas de suspicion de piratage de la station de base BS ou de l'objet OBJ par une personne malveillante.

La génération d'un bruit artificiel consiste à configurer au moins un des dispositifs (station de base BS et/ou objet OBJ) de manière à émettre de façon répétée des signaux depuis et/ou à destination d'au moins une antenne de l'objet OBJ dont l'indice n'est pas compris dans la clé spatiale, pendant la transmission de données. Ces signaux ne contribuent pas à l'échange de données utiles entre la station de base BS et l'objet OBJ, mais forment un bruit artificiel ajouté à la transmission de données utiles. La connaissance partagée de la clé spatiale par la station de base BS et par l'objet OBJ fait que ces deux dispositifs peuvent être configurés pour ignorer tout signal émis à partir de ou reçu sur une telle antenne, aussi ils ne sont pas perturbés par ce bruit artificiel. En revanche, la présence de ce bruit complique la tâche d'une personne malveillante qui chercherait à intercepter et comprendre les données échangées entre la station de base BS et l'objet OBJ. La transmission de données est donc mieux sécurisée.

Le mécanisme de levée d'une alerte repose sur un principe inverse, et consiste au contraire à configurer au moins un des dispositifs (station de base BS et/ou objet OBJ) de manière à ne pas émettre depuis et/ou à destination d'antennes de l'objet dont l'indice n'est pas compris dans la clé spatiale. En d'autres termes, durant la phase de transmission de données postérieure à la phase d'initialisation, la station de base BS n'émettra jamais de signal d'énergie focalisée sur une telle antenne de l'objet OBJ (dans le cadre d'une liaison descendante), et/ou l'objet OBJ n'émettra jamais lui-même de signal à partir d'une telle antenne (dans le cadre d'une liaison descendante). Ainsi, s'il est détecté par l'un des dispositifs au cours d'une transmission de données qu'une telle antenne est utilisée pour émettre et/ou recevoir un signal, cette utilisation a nécessairement pour origine un dispositif non légitime ou corrompu. Par exemple, si l'objet OBJ reçoit un signal dont l'énergie est focalisée sur son antenne A₂ alors que la clé spatiale échangée au cours de la phase d'initialisation était la clé 3-1, ce signal provient soit d'un autre dispositif que la station de base BS avec laquelle il est supposé communiquer, soit de la station de base BS elle-même mais dans un état inattendu et potentiellement corrompu. Il y a donc suspicion de piratage par une personne malveillante, une alerte est levée et diverses mesures de protection complémentaires peuvent être déclenchées.

Bien que les deux mécanismes de sécurisation précédemment décrits reposent sur des principes inverses, il est intéressant de noter qu'ils peuvent quand même être utilisés de manière complémentaire, en particulier dans le cas de transmissions de données bidirectionnelles. Par exemple, la station de base BS peut générer du bruit artificiel lorsqu'elle transmet des données en direction de l'objet OBJ (c'est à dire en liaison descendante), mais lever une alerte lorsqu'elle détecte qu'un dispositif émet des données à partir d'une antenne qu'il n'est pas censé utiliser (c'est à dire en liaison montante). Une telle articulation des mécanismes de sécurisation est pertinente car la station de base est généralement un dispositif plus complexe qu'un simple objet connecté : elle est donc plus à même de disposer de moyens de protection propres plus élaborés contre le piratage, contrairement à l'objet potentiellement plus simple à pirater.

Dans le cadre d'une transmission de données bidirectionnelle, des clés spatiales différentes peuvent être associées respectivement aux transmissions de données en liaison montante et descendante. Par exemple, clé spatiale 1-3 peut être associée au transmission de données en liaison montante (signifiant que les données utiles ne seront émises qu'à partir des antennes A₁ et A₃ de l'objet OBJ en liaison montante) et la clé spatiale 2-1 peut être associée au transmission de données en liaison descendante (signifiant que les données utiles ne seront reçues que sur les antennes A₁ et A₂ de l'objet OBJ en liaison descendante). Dans ce cas, dans un mode de réalisation particulier, les deux clés spatiales sont obtenues (étape 31 de la figure 3) au sein d'un même dispositif, et un séparateur est utilisé lors de la transmission (étape 32 de la figure 3) de ces clés spatiales à l'autre dispositif, afin que ce dernier puisse les distinguer. Par exemple, dans le cas classique où la complexité du système est essentiellement portée par la station de base BS (afin de garder des objets connectés les plus simples possibles), c'est elle qui génère les deux clés spatiales et les transmet à l'objet OBJ. Préalablement à cette transmission des clés, la station de base et l'objet ont pu convenir que la clé spatiale pour la liaison montante serait transmise la première, que la clé spatiale pour la liaison descendante serait transmise après, et convenir d'un séparateur marquant la séparation entre ces deux transmissions. Ce séparateur peut prendre différentes formes, comme par exemple une séquence particulière d'émissions vers des antennes cibles de l'objet OBJ, ou encore l'écoulement d'une durée prédéterminée sans émission. Dans certains cas, la présence d'un tel séparateur est facultative, par exemple si la station de base et l'objet ont déjà échangé au préalable des informations relatives à la longueur des clés spatiales transmises. Dans un autre mode de réalisation, une même clé spatiale peut être définie à la fois pour la transmission de données en liaison descendante et en liaison montante (et donc n'être transmise qu'une fois).

Il convient cependant de noter que, dans le cadre d'une transmission de données bidirectionnelle, le procédé de transmission de données par modulation spatiale selon la technique proposé peut également n'être mis en oeuvre que pour une seule des liaisons de transmission (soit la liaison montante, soit la liaison descendante), l'autre liaison étant alors mise en oeuvre au moyen par exemple d'un autre type de modulation (autre qu'une modulation spatiale) ou au moyen d'une modulation spatiale classique (telle qu'existante dans l'art antérieur).

Outre le fait de définir les antennes qui seront utilisées pour la transmission par modulation spatiale des données utiles entre la station de base BS et l'objet OBJ, la clé spatiale peut également, dans un mode de réalisation particulier, faire office de clé cryptographique. Les données transmises par modulation spatiale entre la station de base et l'objet sont alors des données chiffrées, que la clé spatiale a servi à chiffrer et/ou permet de déchiffrer. Par exemple, si la clé spatiale est générée au niveau de la station de base BS avant d'être transmise à l'objet OBJ, elle peut être définie :
- de manière à ce qu'elle permette à l'objet OBJ de déchiffrer les données chiffrées reçues de la station de base BS, dans le cadre d'une transmission de données en liaison descendante ; et/ou
- de manière à ce qu'elle permette à l'objet OBJ de chiffrer les données à transmettre à la station de base BS, dans le cadre d'une transmission de données en liaison montante.

Afin de complexifier la clé cryptographique, notamment en augmentant sa longueur, des indices de même valeur peuvent être utilisés de manière répétée dans la succession ordonnée d'indices formant la clé spatiale (dans ce cas, les poids associés à chaque antenne pour la mise en oeuvre de la modulation spatiale sont par exemple définis en prenant en compte l'ordre de première apparition de chaque valeur d'indice dans la succession ordonnée d'indices). Ainsi, la technique proposée permet, dans un mode de réalisation, de mettre en oeuvre un mécanisme de double-clés permettant une sécurisation encore plus renforcée de la transmission de données en combinant l'utilisation d'une succession d'indices d'antennes et en apportant une signification particulière à ces indices : les valeurs différentes d'indices présents dans la clé spatiale définissent un jeu d'antennes restreint qui servira pour la transmission de données utiles en modulation spatiale (permettant la mise en oeuvre des mécanismes de génération de bruit et de levée d'alertes précédemment décrits) d'une part, et l'ensemble de la succession ordonnées d'indices formant la clé spatiale définit une clé cryptographique pour chiffrer les données à transmettre et/ou déchiffrer les données chiffrées reçues dans le cadre de cette transmission de données en modulation spatiale.

Selon un autre aspect, la technique proposée se rapporte également à un dispositif (premier dispositif) configuré pour la mise en oeuvre d'une transmission de données par modulation spatiale avec un autre dispositif (deuxième dispositif) comprenant au moins deux antennes. Le premier dispositif comprend au moins deux antennes. Par ailleurs, selon la présente technique, il comprend également :
- des moyens d'obtention d'au moins une clé spatiale comprenant une succession ordonnée d'indices, lesdits indices étant compris dans un même ensemble parmi un ensemble d'indices associés chacun à une des antennes dudit premier dispositif et un ensemble d'indices associés chacun à une des antennes dudit deuxième dispositif ;
- des moyens d'émission d'un signal à destination d'au moins une antenne du deuxième dispositif, à partir d'au moins une antenne du premier dispositif, en fonction de la succession ordonnée d'indices de ladite clé spatiale.

La **figure 7** représente, de manière schématique et simplifiée, la structure d'un tel premier dispositif dans un mode de réalisation illustratif.

Par exemple, le premier dispositif selon la technique proposée comprend, outre ses antennes, une mémoire 71 constituée d'une mémoire tampon (M), une unité de traitement 72, équipée par exemple d'un microprocesseur (µP), et pilotée par le programme d'ordinateur (Pg) 73, mettant en oeuvre le procédé de transmission de données par modulation spatiale selon l'invention.

À l'initialisation, les instructions de code du programme d'ordinateur 73 sont chargées dans la mémoire tampon avant d'être exécutées par le processeur de l'unité de traitement 72. L'unité de traitement 72 reçoit en entrée E par exemple des données indiquant qu'une première partie d'une phase d'initialisation a été réalisée durant laquelle le premier dispositif a pu recueillir des informations relatives à un deuxième dispositif avec lequel il souhaite communiquer via une modulation spatiale. Ces informations portent notamment sur le nombre d'antennes compris dans le deuxième dispositif et sur des moyens permettant d'identifier et de distinguer ces antennes, tels que des indices associés à ces antennes par exemple. Le microprocesseur de l'unité de traitement 72 réalise alors les étapes du procédé de transmission de données par modulation spatiale, selon les instructions du programme d'ordinateur 73, pour finaliser la phase d'initialisation à l'issue de laquelle un contexte favorable pour la mise en oeuvre d'une communication par modulation spatiale sécurisée est établi. Plus particulièrement, le microprocesseur 72 contrôle les émissions de signaux réalisées à partir des antennes du premier dispositif, de manière à permettre en sortie S la transmission de la clé spatiale au dispositif avec lequel il souhaite communiquer.

Ainsi, la technique proposée permet, dans ses différents modes de réalisation, de renforcer la sécurisation des transmissions de données entre un premier dispositif et un deuxième dispositif, en créant une couche de sécurité spécifique aux échanges réalisés par modulation spatiale, qui peut être mise en oeuvre au niveau des couches basses du modèle OSI. Cette couche de sécurité est typiquement directement liée aux couches 1 (couche physique) et/ou 2 (couche de liaison) du modèle OSI.

## Revendications

1. Procédé de transmission de données par modulation spatiale entre un premier dispositif comprenant au moins deux antennes et un deuxième dispositif comprenant au moins deux antennes, ledit procédé étant **caractérisé en ce qu'**il comprend, au niveau du premier dispositif, préalablement à ladite transmission de données, une phase d'initialisation comprenant :
- une étape d'obtention (31) d'au moins une clé spatiale, ladite au moins une clé spatiale comprenant une succession ordonnée d'indices, lesdits indices étant compris dans un même ensemble parmi un ensemble d'indices associés chacun à une des antennes dudit premier dispositif ou un ensemble d'indices associés chacun à une des antennes dudit deuxième dispositif ;
- au moins une première étape d'émission (32) d'un signal à destination d'au moins une antenne du deuxième dispositif, à partir d'au moins une antenne du premier dispositif, en fonction de la succession ordonnée d'indices de ladite clé spatiale.

2. Procédé selon la revendication 1, **caractérisé en ce que** ladite étape d'obtention d'au moins une clé spatiale comprend :
- une étape de sélection d'indices parmi ledit même ensemble ;
- une étape d'ordonnancement des indices sélectionnés, formant ladite succession ordonnée d'indices.

3. Procédé selon la revendication 1 ou 2, **caractérisé en ce que** les indices de ladite au moins une clé spatiale sont compris dans l'ensemble d'indices associés chacun à une des antennes dudit premier dispositif, et **en ce que** ladite au moins une première étape d'émission comprend au moins une étape d'émission d'un signal à destination de toutes les antennes du deuxième dispositif à partir d'une antenne source du premier dispositif.

4. Procédé selon la revendication 1 ou 2, **caractérisé en ce que** les indices de ladite au moins une clé spatiale sont compris dans l'ensemble d'indices associés chacun à une des antennes dudit deuxième dispositif, et **en ce que** ladite au moins une première étape d'émission comprend au moins une étape d'émission d'un signal à destination d'une antenne cible du deuxième dispositif à partir d'au moins une antenne du premier dispositif.

5. Procédé selon la revendication 3, **caractérisé en ce que** ladite transmission de données comprend au moins une deuxième étape d'émission d'un signal à destination dudit deuxième dispositif, à partir d'une antenne source du premier dispositif dont l'indice n'est pas compris dans ladite au moins une clé spatiale.

6. Procédé selon la revendication 3, **caractérisé en ce qu'**il comprend une étape de déclenchement d'une alerte lorsque ledit premier dispositif reçoit un signal dont l'énergie est focalisée sur une antenne cible du premier dispositif dont l'indice n'est pas compris dans ladite au moins une clé spatiale.

7. Procédé selon la revendication 4, **caractérisé en ce que** ladite transmission de données comprend au moins une troisième étape d'émission d'un signal à destination dudit deuxième dispositif, à destination d'une antenne cible du deuxième dispositif dont l'indice n'est pas compris dans ladite au moins une clé spatiale.

8. Procédé selon la revendication 4, **caractérisé en ce qu'**il comprend une étape de déclenchement d'une alerte lorsque ledit premier dispositif détermine qu'une des données reçues durant ladite transmission de données provient d'une antenne source du deuxième dispositif dont l'indice n'est pas compris dans ladite au moins une clé spatiale.

9. Procédé selon l'une quelconque des revendications précédentes, **caractérisé en ce que** ladite transmission de données est une transmission de données chiffrées, et **en ce que** ladite au moins une clé spatiale est une clé cryptographique associée auxdites données chiffrées.

10. Premier dispositif comprenant au moins deux antennes et configuré pour la mise en oeuvre d'une transmission de données par modulation spatiale avec un deuxième dispositif comprenant au moins deux antennes, ledit premier dispositif étant **caractérisé en ce qu'**il comprend :
- des moyens d'obtention d'au moins une clé spatiale, ladite au moins une clé spatiale comprenant une succession ordonnée d'indices, lesdits indices étant compris dans un même ensemble parmi un ensemble d'indices associés chacun à une des antennes dudit premier dispositif et un ensemble d'indices associés chacun à une des antennes dudit deuxième dispositif ;
- des moyens d'émission d'un signal à destination d'au moins une antenne du deuxième dispositif, à partir d'au moins une antenne du premier dispositif, en fonction de la succession ordonnée d'indices de ladite clé spatiale.

11. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de transmission de données par modulation spatiale selon l'une quelconque des revendications 1 à 9, lorsqu'il est exécuté sur un premier dispositif selon la revendication 10.

## Patentansprüche

1. Verfahren zur Datenübertragung durch räumliche Modulation zwischen einer ersten Vorrichtung, die mindestens zwei Antennen umfasst, und einer zweiten Vorrichtung, die mindestens zwei Antennen umfasst, wobei das Verfahren **dadurch gekennzeichnet ist, dass** es auf der Ebene der ersten Vorrichtung vor der Datenübertragung eine Initialisierungsphase aufweist, umfassend:
- einen Schritt des Erhaltens (31) mindestens eines räumlichen Schlüssels, wobei der mindestens eine räumliche Schlüssel eine geordnete Folge von Indizes umfasst, wobei die Indizes in einem gleichen Satz aus einem Satz von Indizes, die jeweils einer der Antennen der ersten Vorrichtung zugeordnet sind, oder einem Satz von Indizes, die jeweils einer der Antennen der zweiten Vorrichtung zugeordnet sind, enthalten sind;
- mindestens einen ersten Schritt des Sendens (32) eines Signals an mindestens eine Antenne der zweiten Vorrichtung, ausgehend von wenigstens einer Antenne der ersten Vorrichtung, in Abhängigkeit von der geordneten Folge von Indizes des räumlichen Schlüssels.

2. Verfahren nach Anspruch 1, **dadurch gekennzeichnet, dass** der Schritt des Erhaltens von mindestens einem räumlichen Schlüssel umfasst:
- einen Schritt des Auswählens von Indizes aus demselben Satz;
- einen Schritt des Ordnens der ausgewählten Indizes, welche die geordnete Reihenfolge von Indizes bilden.

3. Verfahren nach Anspruch 1 oder 2, **dadurch gekennzeichnet, dass** die Indizes des mindestens einen räumlichen Schlüssels in dem Satz von Indizes enthalten sind, die jeweils einer der Antennen der ersten Vorrichtung zugeordnet sind, und dass der mindestens eine erste Sendeschritt mindestens einen Schritt des Sendens eines Signals an alle Antennen der zweiten Vorrichtung ausgehend von einer Quellantenne der ersten Vorrichtung umfasst.

4. Verfahren nach Anspruch 1 oder 2, **dadurch gekennzeichnet, dass** die Indizes des mindestens einen räumlichen Schlüssels in dem Satz von Indizes enthalten sind, die jeweils einer der Antennen der zweiten Vorrichtung zugeordnet sind, und dass der mindestens eine erste Sendeschritt mindestens einen Schritt des Sendens eines Signals an eine Zielantenne der zweiten Vorrichtung von mindestens einer Antenne der ersten Vorrichtung aus umfasst.

5. Verfahren nach Anspruch 3, **dadurch gekennzeichnet, dass** die Datenübertragung mindestens einen zweiten Schritt des Sendens eines Signals an die zweite Vorrichtung von einer Quellantenne der ersten Vorrichtung umfasst, deren Index nicht in dem mindestens einen räumlichen Schlüssel enthalten ist.

6. Verfahren nach Anspruch 3, **dadurch gekennzeichnet, dass** es einen Schritt zum Auslösen eines Alarms umfasst, wenn die erste Vorrichtung ein Signal empfängt, dessen Energie auf eine Zielantenne der ersten Vorrichtung fokussiert ist, deren Index nicht in dem mindestens einen räumlichen Schlüssel enthalten ist.

7. Verfahren nach Anspruch 4, **dadurch gekennzeichnet, dass** die Datenübertragung mindestens einen dritten Schritt des Sendens eines Signals an die zweite Vorrichtung zu einer Zielantenne der zweiten Vorrichtung umfasst, deren Index nicht in dem mindestens einen räumlichen Schlüssel enthalten ist.

8. Verfahren nach Anspruch 4, **dadurch gekennzeichnet, dass** es einen Schritt zum Auslösen eines Alarms umfasst, wenn die erste Vorrichtung feststellt, dass ein Datum der während der Datenübertragung empfangenen Daten von einer Quellantenne der zweiten Vorrichtung stammt, deren Index nicht in dem mindestens einen räumlichen Schlüssel enthalten ist.

9. Verfahren nach einem der vorhergehenden Ansprüche, **dadurch gekennzeichnet, dass** die Datenübertragung eine Übertragung von verschlüsselten Daten ist und dass der mindestens eine räumliche Schlüssel ein kryptografischer Schlüssel ist, der mit den verschlüsselten Daten verknüpft ist.

10. Erste Vorrichtung, die mindestens zwei Antennen umfasst und für die Durchführung einer Datenübertragung durch räumliche Modulation mit einer zweiten Vorrichtung eingerichtet ist, die mindestens zwei Antennen umfasst, wobei die erste Vorrichtung **dadurch gekennzeichnet ist, dass** sie Folgendes umfasst:
- Mittel zum Erhalten mindestens eines räumlichen Schlüssels, wobei der mindestens eine räumliche Schlüssel eine geordnete Folge von Indizes umfasst, wobei die Indizes in einem gleichen Satz aus einem Satz von Indizes, die jeweils einer der Antennen der ersten Vorrichtung zugeordnet sind, und einem Satz von Indizes, die jeweils einer der Antennen der zweiten Vorrichtung zugeordnet sind, enthalten sind, und wobei der mindestens eine räumliche Schlüssel eine geordnete Folge von Indizes umfasst;
- Mittel zum Senden eines Signals an mindestens eine Antenne der zweiten Vorrichtung, ausgehend von mindestens einer Antenne der ersten Vorrichtung, in Abhängigkeit von der geordneten Folge von Indizes des räumlichen Schlüssels.

11. Computerprogrammprodukt, das von einem Kommunikationsnetz heruntergeladen werden kann und/oder auf einem computerlesbaren Medium gespeichert und/oder von einem Mikroprozessor ausführbar ist, **dadurch gekennzeichnet, dass** es Programmcode-Befehle zur Ausführung eines Verfahrens zur Datenübertragung durch räumliche Modulation nach einem der Ansprüche 1 bis 9 enthält, wenn es auf einer ersten Vorrichtung nach Anspruch 10 ausgeführt wird.

## Claims

1. A method for transmitting data by spatial modulation between a first device comprising at least two antennas and a second device comprising at least two antennas, said method being **characterised in that** it comprises, at the first device, prior to said data transmission, an initialisation phase comprising:
- a step of obtaining (31) at least one spatial key, said at least one spatial key comprising an ordered succession of indices, said indices being comprised in a same set among a set of indices each associated with one of the antennas of said first device or a set of indices each associated with one of the antennas of said second device;
- at least a first step of emitting (32) a signal to at least one antenna of the second device, from at least one antenna of the first device, according to the ordered succession of indices of said spatial key.

2. The method according to claim 1, **characterised in that** said step of obtaining at least one spatial key comprises:
- a step of selecting indices from said same set;
- a step of ordering the selected indices, forming said ordered succession of indices.

3. The method according to claim 1 or 2, **characterised in that** the indices of said at least one spatial key are comprised in the set of indices each associated with one of the antennas of said first device, and **in that** said at least one first emission step comprises at least one step of emitting a signal to all the antennas of the second device from a source antenna of the first device.

4. The method according to claim 1 or 2, **characterised in that** the indices of said at least one spatial key are comprised in the set of indices each associated with one of the antennas of said second device, and **in that** said at least one first emission step comprises at least one step of emitting a signal to a target antenna of the second device from at least one antenna of the first device.

5. The method according to claim 3, **characterised in that** said data transmission comprises at least a second step of emitting a signal to said second device, from a source antenna of the first device whose index is not comprised in said at least one spatial key.

6. The method according to claim 3, **characterised in that** it comprises a step of triggering an alert when said first device receives a signal whose energy is focused on a target antenna of the first device whose index is not comprised in said at least one spatial key.

7. The method according to claim 4, **characterised in that** said data transmission comprises at least a third step of emitting a signal to said second device, to a target antenna of the second device whose index is not included in said at least one spatial key.

8. The method according to claim 4, **characterised in that** it comprises a step of triggering an alert when said first device determines that one of the data received during said data transmission comes from a source antenna of the second device whose index is not comprised in said at least one spatial key.

9. The method according to any one of the preceding claims, **characterised in that** said data transmission is an encrypted data transmission, and **in that** said at least one spatial key is a cryptographic key associated with said encrypted data.

10. A first device comprising at least two antennas and configured for the implementation of data transmission by spatial modulation with a second device comprising at least two antennas, said first device being **characterised in that** it comprises:
- means for obtaining at least one spatial key, said at least one spatial key comprising an ordered succession of indices, said indices being comprised in a same set among a set of indices each associated with one of the antennas of said first device and a set of indices each associated with one of the antennas of said second device;
- means for emitting a signal to at least one antenna of the second device, from at least one antenna of the first device, according to the ordered succession of indices of said spatial key.

11. A computer program product downloadable from a communication network and/or stored on a computer-readable medium and/or executable by a microprocessor, **characterised in that** it comprises program code instructions for the execution of a spatial modulation data transmission method according to any one of claims 1 to 9 when executed on a first device according to claim 10.
